# EUROPÄISCHE PATENTANMELDUNG

(11) **EP 3 772 504 A1**
(43) Veröffentlichungstag der Anmeldung: **10.02.2021**
(21) Anmeldenummer: 20181354.0
(22) Anmeldetag: 22.06.2020
(51) Int. Cl.: C05B 11/02, C05B 11/04

(54) **VORRICHTUNG ZUR HERSTELLUNG VON DÜNGEMITTELGRANULAT**

(30) Priorität: 08.08.2019 DE 102019211955
(71) Anmelder: Glatt Ingenieurtechnik GmbH, 99427 Weimar (DE)
(72) Erfinder: Jacob, Michael, 99425 Weimar (DE)
(74) Vertreter: Patentanwälte Magenbauer & Kollegen Partnerschaft mbB

(57) **Zusammenfassung**

Die Erfindung betrifft eine Vorrichtung (1) zur Herstellung von Düngemittelgranulat umfassend eine über einen Rohstoffzulauf (4, 23), einen Säurezulauf (5) und einen Reaktorablauf (6) verfügende, einen Reaktor (8) aufweisende Reaktoreinheit (3) zur Erzeugung einer Suspension aus dem phosphathaltigen Rohstoff und der Säure sowie einen Granulator (9) zur Granulation der erzeugten Suspension, wobei die Vorrichtung (1) eine Mahleinheit (2) für den phosphathaltigen Rohstoff aufweist.

## Beschreibung

Die Erfindung betrifft eine Vorrichtung zur Herstellung von Düngemittelgranulat umfassend eine über einen Rohstoffzulauf, einen Säurezulauf und einen Reaktorablauf verfügende, einen Reaktor aufweisende Reaktoreinheit zur Erzeugung einer Suspension aus dem phosphathaltigen Rohstoff und der Säure sowie einen Granulator zur Granulation der erzeugten Suspension.

Verfahren und Vorrichtungen zur Herstellung von Düngemittelgranulaten gehören seit vielen Jahren zum Stand der Technik. Aufgrund gesetzlicher Vorgaben und der Abnahme der weltweiten Phosphorvorräte wird eine Phosphorrückgewinnung aus phosphathaltigen Rohstoffen, wie bspw. Aschen aus der Mono- oder Mitverbrennung von Klärschlamm, Tierausscheidungen, Tiermehl, Tierresten und Tierkörpern, Aschen aus der Verbrennung von Gülle und Gärresten als Einzelstoff bzw. Gemische daraus, immer wichtiger für die Industrie.

In der Offenlegungsschrift DE 10 2009 020 745 A1 ist ein Verfahren zur Gewinnung von Wertstoffen aus Klärschlammprodukten durch Extraktion offenbart, wobei eine Suspension des Klärschlammproduktes in Wasser, Alkohol, einem Wasser/AlkoholGemisch oder einer wässrigen Lösung hergestellt und gasförmiges oderüberkritisches Kohlendioxid als Extraktionsmittel in diese Suspension des Klärschlammproduktes eingeleitet wird, ungelöste Feststoffe von dem flüssigen Suspendiermittel abgetrennt, Kohlendioxid aus dem Suspendiermittel entfernt und in dem Suspendiermittel gelöste Wertstoffe ausgefällt und von dem Suspendiermittel abgetrennt werden. Nachteilig an diesem Verfahren ist der sehr hohe Aufwand zu dessen Durchführung wodurch das Verfahren sehr kostenintensiv ist.

Die DE 10 2016 116 633 A1 offenbart ein Verfahren zur Herstellung von Düngemittelgranulaten, wobei der phosphathaltige Sekundärrohstoff mit einer Mineralsäure zu einer Suspension versetzt wird und die Suspension anschließend einer Granulation zugeführt wird sowie die mit dem Verfahren hergestellten Düngemittelgranulate. Nachteilig hieran ist, dass die zu Düngemittelgranulaten verarbeitete Suspension Rohstoffpartikel aufweist, die reaktionsträge sind und an Engstellen in einer Vorrichtung wie Düsen zur Verstopfung dieser neigen.

Aufgabe der Erfindung ist es daher die aus dem Stand der Technik bekannten Nachteile zu überwinden und eine Vorrichtung bereitzustellen, die Düngemittelgranulate herstellt, wobei die in der Suspension gelösten Rohstoffpartikel eine große Reaktivität aufweisen und an Engstellen der Vorrichtung wie Düsen nicht zur Verstopfung dieser neigen.

Die Aufgabe wird durch eine Vorrichtung eingangs genannter Art dadurch gelöst, dass die Vorrichtung eine Mahleinheit für den phosphathaltigen Rohstoff aufweist. Durch den vor der Granulation mittels der Mahleinheit erfolgenden Mahlvorgang wird die Prozessstabilität gesteigert, indem durch den Mahlvorgang die große Rohstoffpartikel aufweisenden phosphathaltigen Rohstoffe zerkleinert werden. Hierdurch wird die Reaktionsteilnahme der Rohstoffpartikel auch durch die Vergrößerung der Oberfläche der Rohstoffpartikel erhöht, d. h. die Kinetik der Reaktion wird beschleunigt, was wiederum zu einer gleichmäßigeren Umsetzung des phosphathaltigen Rohstoffs und zu Zeitersparnis führt. Gleichzeitig wird zudem die Verstopfungsgefahr an Engstellen in der Vorrichtung, insbesondere in Düsen, an Klappen und Schiebern oder dergleichen, reduziert. Zudem wird die Sedimentation und der Anteil an grobkörnigen Sand der Rohstoffpartikel durch den mittels der Mahleinheit durchgeführten Mahlvorgang minimiert.

Düngemittel sind Stoffe und Stoffgemische, welche in der Land- und Forstwirtschaft sowie im Gartenbau zur Ergänzung des Nährstoffangebots für die angebauten Pflanzen, insbesondere Kulturpflanzen, mit diversen Eigenschaften, gegebenenfalls kombiniert und/oder funktionalisiert mit weiteren Materialien, benutzt werden.

Düngemittelgranulate sind Düngemittel in Granulatform, insbesondere mit einer annähernd sphärischen Form, einer vorzugsweise ausreichenden Eigenfestigkeit und vornehmlich einer mittleren Granulatgröße von 100 *µ*m bis 25 mm, bevorzugt von 100 *µ*m bis 10 mm, besonders bevorzugt von 250 *µ*m bis 5 mm, ganz besonders bevorzugt von 500 *µ*m bis 3 mm.

Gemäß einer vorteilhaften Ausgestaltung des Verfahrens ist die Säure eine Mineralsäure oder ein beliebiges Gemisch aus den Mineralsäuren, bevorzugt Salzsäure, Schwefelsäure, Salpetersäure oder Phosphorsäure.

Nach einer diesbezüglich vorteilhaften Ausgestaltung der Vorrichtung sind Mahleinheit, Reaktoreinheit und Granulator fluidisch miteinander verbunden. Insbesondere sind Reaktoreinheit und Granulator mittels Rohrleitung, Schlauchverbindung, Transportband oder dergleichen miteinander verbunden, sodass der Granulator, insbesondere kontinuierlich, mit der erzeugten Suspension zur Herstellung des Düngemittelgranulats versorgbar ist.

Gemäß einer zusätzlichen zuträglichen Ausgestaltung der Vorrichtung ist die Mahleinheit vor, nach und/oder in der Reaktoreinheit zur Erzeugung der Suspension aus einem phosphathaltigen Rohstoff und einer Säure angeordnet. Wird der Mahlvorgang vor der Erzeugung der Suspension in der Reaktoreinheit durchgeführt erfolgt dieser als Trockenmahlung der phosphathaltigen Rohstoffe. Im Gegensatz hierzu wird eine Nassmahlung der phosphathaltigen Rohstoffe während und/oder nach der Erzeugung der Suspension in der Reaktoreinheit eingesetzt. Bei einer Kombination von Trocken- und Nassmahlung im Verfahren findet der Mahlvorgang sowohl vor als auch während und/oder nach der Erzeugung der Suspension in der Reaktoreinheit statt. Durch den Einsatz der unterschiedlichen Mahlverfahren wird für den Anlagenbauer bei der Ausgestaltung des Verfahrens die Möglichkeit geschaffen auf die unterschiedlichen phosphathaltigen Rohstoffe einzugehen und das Verfahren stets optimal an die phosphathaltigen Rohstoffe anzupassen und auf die Vorgaben, wie bspw. die Investitionskosten, der Betreiber einzugehen. Die Trockenmahlung weist als Vorteil eine hohe Mahleffektivität bei geringem Platzbedarf und geringem spezifischen Energieverbrauch auf. Bei der Trockenmahlung ist die gewünschte Endfeinheit der Rohstoffpartikel des phosphathaltigen Rohstoffs frei und exakt einstellbar. Bei der Nassmahlung sind bei einem geringen spezifischen Energieverbrauch auch grobe phosphathaltige Rohstoffe verarbeitbar. Zudem weist die Rührwerkslagerung keine Produktberührung auf. Eine Kombination von Trocken- und Nassmahlung ermöglicht eine Nachmahlung von Suspensionen und trockenen Rohstoffen. Vorteilhaft ist hierbei ein deutlich reduzierter Gesamtenergieverbrauch, eine Durchsatzerhöhung bei gleichbleibender Produktfeinheit oder alternativ eine Steigerung der Produktfeinheit bei gleichbleibendem Durchsatz. Ferner macht die Kombination mit von Trocken- und Nassmahlung den Einsatz von kontinuierlich und diskontinuierlich arbeitenden Mühlen möglich.

Entsprechend einer vorteilhaften Weiterbildung der Vorrichtung verfügt die Reaktoreinheit über eine am Reaktor angeordnete Reaktorrezirkulationseinrichtung für die Suspension. Durch Änderung des Anteils des rezirkulierten Suspensionsstoffstroms ist das Reaktionsvolumen in der Reaktoreinheit und die Verweilzeit der Suspension in der Reaktoreinheit getrennt voneinander einstellbar. Durch die Rezirkulation der Suspension wird die durchschnittliche Verweilzeit der Suspension in der Reaktoreinheit verlängert, sodass ein verbesserter Aufschluss des in der Reaktoreinheit befindlichen phosphathaltigen Rohstoffs durch die Säure erreicht wird.

Bevorzugt weist die Reaktorrezirkulationseinrichtung die Mahleinheit auf. Der Mahlvorgang des phosphathaltigen Rohstoffs während der Rezirkulation der Suspension hat den Vorteil, dass hierdurch der phosphathaltige Rohstoff in der rezirkulierenden Suspension gemahlen wird und so die vorgenannten Merkmale einer vergrößerten Reaktionsoberfläche der Phosphathaltigen Rohstoffpartikel sowie eine beschleunigte Kinetik erzielt werden, wobei insbesondere wird jedoch die Vergrößerung der Oberfläche der Partikel der phosphathaltigen Rohstoffe vergrößert sowie die Verstopfungsgefahr, insbesondere in Düsen, an Klappen und Schiebern oder dergleichen, reduziert wird.

Weiter bevorzugt weist die Reaktorrezirkulationseinrichtung den Rohstoffzulauf auf. Hierdurch besteht die Möglichkeit der Reaktoreinheit phosphathaltige Rohstoffe zuzuführen oder bei Konzentrationsschwankungen der Suspension durch eine weitere Zufuhr an phosphathaltigen Rohstoffen diese auszugleichen.

Nach einer bevorzugten Ausgestaltung der Vorrichtung weist die Reaktoreinheit, bevorzugt der Reaktor, über einen Zerhacker. Insbesondere weist der Zerhacker einen Zerhackerantrieb, bevorzugt einen elektrischen Direktantrieb, besonders bevorzugt einen Elektro- oder Torquemotor auf. Dies hat den Vorteil, dass in der Suspension verbliebene zu große Rohstoffpartikel zu kleineren Rohstoffpartikeln durch den Zerhacker zerhackt werden, sodass diese im Verfahren problemlos weiterverarbeitet werden können.

Entsprechend einer weiteren vorteilhaften Fortbildung der Vorrichtung weist die Reaktoreinheit, bevorzugt der Reaktor, eine Rühreinheit auf. Insbesondere weist die Rühreinheit einen Rührantrieb, bevorzugt einen elektrischen Direktantrieb, besonders bevorzugt einen Elektro- oder Torquemotor auf. Durch den Einsatz einer Rühreinheit wird die aus phosphathaltigem Rohstoff und Säure gebildete Suspension verbessert durchmischt, sodass zum einen ein optimaler Aufschluss der in dem Rohstoff gebundenen Phosphate durch die Säure erfolgt, d. h. ein höherer Umsatz, und zum anderen eine hohe Mischgüte der Suspension erreicht wird.

Nach einer darüber hinaus vorteilhaften Weiterbildung der Vorrichtung die verfügt Reaktoreinheit über eine Temperiereinheit zur Wärmezufuhr oder Wärmeabfuhr der Suspension. Hierbei ist die Temperiereinheit bevorzugt als Doppelmantel des Reaktors ausgebildet ist. Mittels Wärmezufuhr oder Wärmeabfuhr lassen sich beispielsweise durch exotherme oder endotherme Reaktionen auftretende Temperaturänderungen besonders gut abfangen, sodass die gewünschten Reaktionsbedingungen stets erreicht werden und ermöglichen somit die optimale Kontrolle über das ablaufende Verfahren. Zudem ist die Ausführungsform eines einen Doppelmantel aufweisenden Reaktors eine sehr kostengünstig in der Herstellung und sehr einfach ausführbar.

Weiter vorteilhaft verfügt die Vorrichtung über eine Klassiereinheit, bevorzugt ein Sieb oder einen Sichter. Bevorzugt ist die Klassiereinheit im Rohstoffzulauf angeordnet. Durch die Klassiereinheit erfolgt eine Trennung des phosphathaltigen Rohstoffs in Fraktionen, vorzugsweise nach den Kriterien Partikelgröße oder Partikeldichte. Ziel der Klassiereinheit ist die Herstellung von mindestens zwei Teilmengen des ursprünglichen phosphathaltigen Rohstoffs, wobei jede Teilmenge möglichst vollständig den vorgegebenen Partikelgrößenkriterien entspricht. Hierdurch wird neben dem Herausfiltern von groben Abfällen durch die Klassiereinheit eine Vorauswahl der weiterzuverarbeitenden phosphathaltigen Rohstoffpartikel erreicht, sodass das herzustellende Düngemittelgranulat eine besonders hohe Qualität aufweist.

Gemäß einer weiteren förderlichen Fortbildung der Vorrichtung ist der Granulator als Wirbelschicht- oder Strahlschichtapparat ausgebildet. Vorteilhafterweise werden hierdurch die Düngemittelgranulate hergestellt, wobei die Eigenschaften der Düngemittelgranulate gezielt einstellbar sind oder eingestellt werden.

Entsprechend dem Verfahren zur Herstellung von Düngemittelgranulat, wobei zuerst eine Suspension aus einem phosphathaltigen Rohstoff und einer Säure in einer Reaktoreinheit erzeugt und diese danach einem Granulator zur Granulation zugeführt wird, findet vor der Granulation ein Mahlvorgang des phosphathaltigen Rohstoffs statt. Durch den vor der Granulation erfolgenden Mahlvorgang wird die Prozessstabilität gesteigert, indem durch den Mahlvorgang die große Rohstoffpartikel aufweisenden phosphathaltigen Rohstoffe zerkleinert werden. Hierdurch wird die Reaktionsteilnahme der Rohstoffpartikel auch durch die Vergrößerung der Oberfläche der Rohstoffpartikel erhöht, d. h. die Kinetik der Reaktion wird beschleunigt, was wiederum zu einer gleichmäßigeren Umsetzung des phosphathaltigen Rohstoffs und zu Zeitersparnis führt. Gleichzeitig wird zudem die Verstopfungsgefahr an Engstellen in der Vorrichtung, insbesondere in Düsen, an Klappen und Schiebern oder dergleichen, reduziert. Zudem wird die Sedimentation und der grobe Sandanteil der Rohstoffpartikel durch den Mahlvorgang minimiert.

Entsprechend einer diesbezüglich vorteilhaften Weiterbildung des Verfahrens wird der Mahlvorgang als Trockenmahlung und/oder Nassmahlung durchgeführt. Die Trockenmahlung weist als Vorteil eine hohe Mahleffektivität bei geringem Platzbedarf und geringem spezifischen Energieverbrauch auf. Bei der Trockenmahlung ist die gewünschte Endfeinheit der Rohstoffpartikel des phosphathaltigen Rohstoffs frei und exakt einstellbar. Bei der Nassmahlung sind bei einem geringen spezifischen Energieverbrauch auch grobe phosphathaltige Rohstoffe verarbeitbar. Zudem weist die Rührwerkslagerung keine Produktberührung auf. Eine Kombination von Trocken- und Nassmahlung ermöglicht eine Nachmahlung von Suspensionen und trockenen Rohstoffen. Vorteilhaft ist hierbei ein deutlich reduzierter Gesamtenergieverbrauch, eine Durchsatzerhöhung bei gleichbleibender Produktfeinheit oder alternativ eine Steigerung der Produktfeinheit bei gleichbleibendem Durchsatz. Ferner macht die Kombination mit von Trocken- und Nassmahlung den Einsatz von kontinuierlich und diskontinuierlich arbeitenden Mühlen möglich.

Nach einer weiteren zuträglichen Fortbildung des Verfahrens erfolgt der Mahlvorgang vor, während und/oder nach der Erzeugung der Suspension erfolgt. Wird der Mahlvorgang vor der Erzeugung der Suspension in der Reaktoreinheit durchgeführt erfolgt dieser als Trockenmahlung der phosphathaltigen Rohstoffe. Im Gegensatz hierzu wird eine Nassmahlung der phosphathaltigen Rohstoffe während und/oder nach der Erzeugung der Suspension in der Reaktoreinheit eingesetzt. Bei einer Kombination von Trocken- und Nassmahlung im Verfahren findet der Mahlvorgang sowohl vor als auch während und/oder nach der Erzeugung der Suspension in der Reaktoreinheit statt. Durch den Einsatz der unterschiedlichen Mahlverfahren wird für den Anlagenbauer bei der Ausgestaltung des Verfahrens die Möglichkeit geschaffen auf die unterschiedlichen phosphathaltigen Rohstoffe einzugehen und das Verfahren stets optimal an die phosphathaltigen Rohstoffe anzupassen.

Gemäß einer zusätzlichen vorteilhaften Ausgestaltung des Verfahrens wird die Suspension unter Rühren in der Reaktoreinheit erzeugt. Durch den Einsatz einer Rühreinheit wird die aus phosphathaltigem Rohstoff und Säure gebildete Suspension verbessert durchmischt, sodass zum einen ein optimaler Aufschluss der in dem Rohstoff gebundenen Phosphate durch die Säure erfolgt und zum anderen eine hohe Mischgüte der Suspension erreicht wird.

Die Suspension wird bevorzugt unter Wärmezufuhr oder Wärmeabfuhr erzeugt. Mittels Wärmezufuhr oder Wärmeabfuhr lassen sich beispielsweise durch exotherme oder endotherme Reaktionen auftretende Temperaturänderungen besonders gut abfangen, sodass die gewünschten Reaktionsbedingungen stets erreicht werden und ermöglichen somit die optimale Kontrolle über das ablaufende Verfahren.

Nach einer zusätzlichen vorteilhaften Weiterbildung des Verfahrens wird die in der Reaktoreinheit erzeugte Suspension rezirkuliert. Durch Änderung des Anteils des rezirkulierten Suspensionsstoffstroms ist das im Reaktor befindliche Reaktionsvolumen und die Verweilzeit der Suspension in der Reaktoreinheit getrennt voneinander einstellbar. Die Rezirkulation der Suspension verlängert die durchschnittliche Verweilzeit der Suspension in der Reaktoreinheit, wodurch ein besserer Aufschluss des in der Reaktoreinheit befindlichen phosphathaltigen Rohstoffs erreicht wird.

Darüber hinaus weiter bevorzugt findet der Mahlvorgang des phosphathaltigen Rohstoffs während der Rezirkulation der Suspension statt. Hierdurch wird der phosphathaltige Rohstoff in der rezirkulierenden Suspension gemahlen und so die vorgenannten Merkmale erzielt, insbesondere wird jedoch die Verstopfungsgefahr, insbesondere in Düsen, an Klappen und Schiebern oder dergleichen, reduziert.

Entsprechend einer zusätzlichen Fortbildung des Verfahrens wird die in der Reaktoreinheit erzeugte Suspension mittels eines Zerhackers in der Reaktoreinheit zerkleinert. Dies hat den Vorteil, dass in der Suspension verbliebene zu große Rohstoffpartikel zu kleineren Rohstoffpartikeln zerhackt werden, sodass diese im Verfahren problemlos weiterverarbeitet werden können.

Gemäß einer weiteren vorteilhaften Ausgestaltung des Verfahrens werden in der in der Reaktoreinheit erzeugten Suspension die schwerlöslichen Phosphate des phosphathaltigen Rohstoffs zumindest teilweise gelöst und in eine neutral-ammoniumcitratlösliche Phosphatphase umgewandelt, sodass sich ein Düngemittelgranulat bildet dessen P₂O₅-Gehalt (P-Anteil) größer 75 % neutral-ammoniumcitratlöslich ist. Die Löslichkeiten liefern Anhaltspunkte für die Wirkungsdynamik des jeweiligen Düngemittels geben. Der säurelösliche P-Anteil von Düngemitteln wird als langfristig nutzbar angesehen. Langfristig bedeutet hierbei über mehrere Fruchtfolgen hinweg. Dieser in "Königswasser" lösliche P-Anteil wird als Gesamtgehalt bezeichnet. Der neutral-ammoniumcitratlösliche P-Anteil kann als Anhaltspunkt für die mittelfristige Verfügbarkeit des Phosphats herangezogen werden, d. h. über den Zeitraum von etwa einer Fruchtfolge und der unmittelbar verfügbare P-Anteil eines Düngemittels wird durch seine Löslichkeit in Wasser beschrieben. Je höher der wasserlösliche Anteil, desto schneller bzw. leichter die Verfügbarkeit des Dünge-P für die Pflanze. Die Löslichkeiten haben in erster Linie den Zweck, jeweils ganz bestimmte Phosphatdüngemittel zu charakterisieren, d. h. sie in ihren typbestimmenden Bestandteilen zu beschreiben.

In einer zusätzlichen vorteilhaften Ausgestaltung des Verfahrens wird der phosphathaltige Rohstoff vor einer Zuführung zur Reaktoreinheit klassiert. Bevorzugt erfolgt das Klassieren mittels Sieben oder Sichten. Es erfolgt eine Trennung des phosphathaltigen Rohstoffs in Fraktionen, vorzugsweise nach den Kriterien Partikelgröße oder Partikeldichte. Ziel ist die Herstellung von mindestens zwei Teilmengen des ursprünglichen phosphathaltigen Rohstoffs, wobei jede Teilmenge möglichst vollständig den vorgegebenen Partikelgrößenkriterien entspricht. Hierdurch wird neben dem Herausfiltern von groben Abfällen eine Vorauswahl der weiterzuverarbeitenden phosphathaltigen Rohstoffpartikel erreicht, sodass das herzustellende Düngemittelgranulat eine besonders hohe Qualität aufweist.

Weitere Vorteile und vorteilhafte Ausgestaltungen der Erfindung sind der nachfolgenden Beschreibung und den Ansprüchen und entnehmbar.

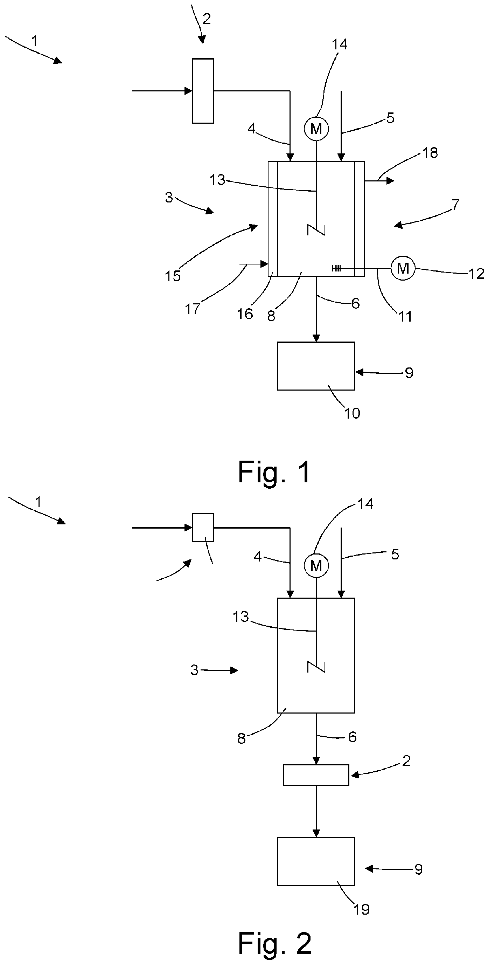

Nachfolgend wird die Erfindung anhand der beiliegenden Zeichnung näher erläutert dieser zeigen
- Figur 1: ein Grundfließbild eines ersten Ausführungsbeispiels einer bevorzugten Vorrichtung, wobei eine Mahleinheit vor einer Reaktoreinheit zur Erzeugung der Suspension aus einem phosphathaltigen Rohstoff und einer Säure angeordnet ist,
- Figur 2: ein Grundfließbild eines zweiten Ausführungsbeispiels einer bevorzugten Vorrichtung, wobei eine Mahleinheit nach einer Reaktoreinheit zur Erzeugung der Suspension aus einem phosphathaltigen Rohstoff und einer Säure angeordnet ist,

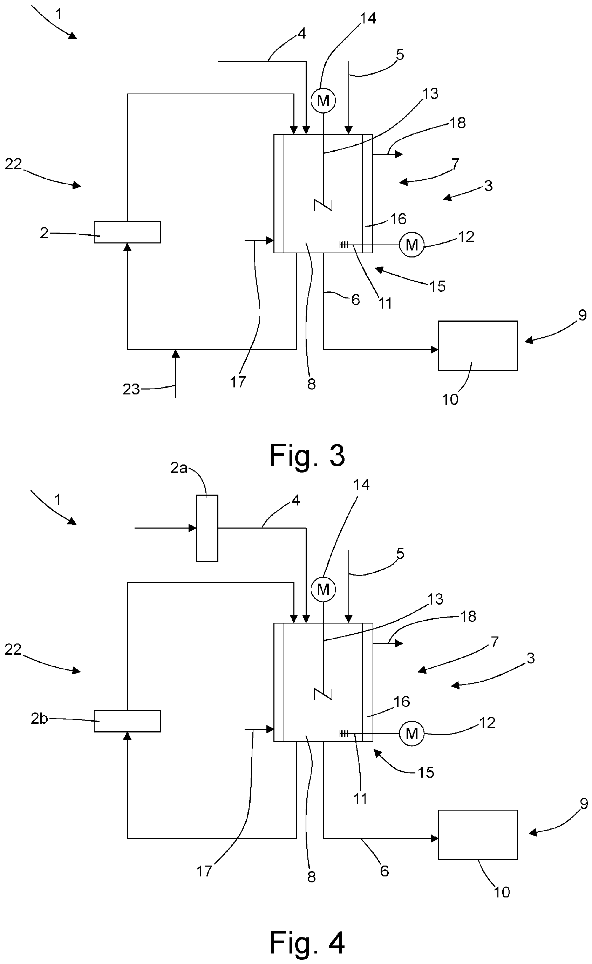

- Figur 3: ein Grundfließbild eines dritten Ausführungsbeispiels einer bevorzugten Vorrichtung, wobei eine Mahleinheit in einer Reaktorrezirkulationseinrichtung einer Reaktoreinheit zur Erzeugung der Suspension aus einem phosphathaltigen Rohstoff und einer Säure angeordnet ist,
- Figur 4: ein Grundfließbild eines vierten Ausführungsbeispiels einer bevorzugten Vorrichtung, wobei eine Mahleinheit vor einer Reaktoreinheit und in einer Reaktorrezirkulationseinrichtung der Reaktoreinheit zur Erzeugung der Suspension aus einem phosphathaltigen Rohstoff und einer Säure angeordnet ist,

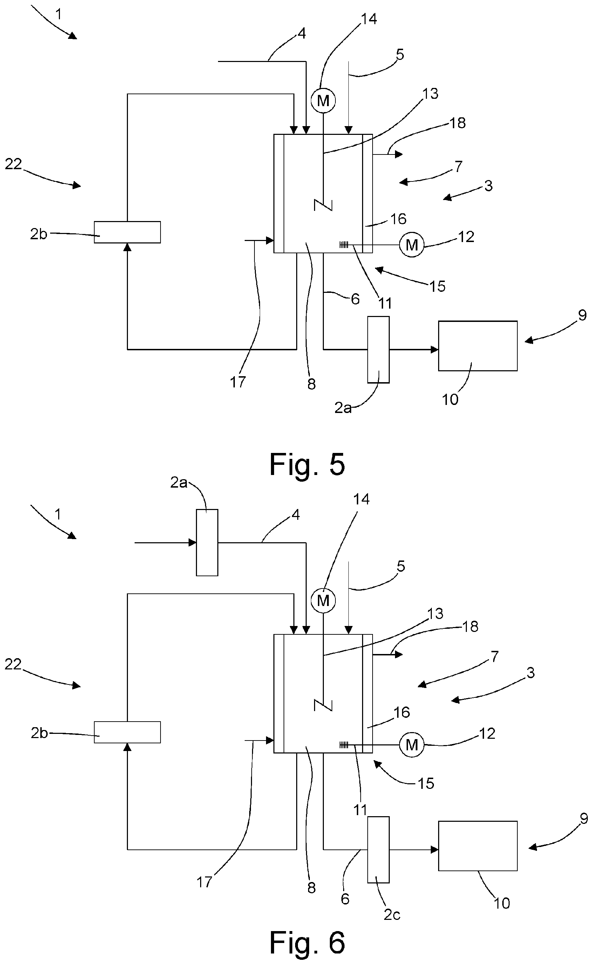

- Figur 5: ein Grundfließbild eines fünften Ausführungsbeispiels einer bevorzugten Vorrichtung, wobei eine Mahleinheit in einer Reaktorrezirkulationseinrichtung einer Reaktoreinheit zur Erzeugung der Suspension aus einem phosphathaltigen Rohstoff und einer Säure und nach der Reaktoreinheit angeordnet ist,
- Figur 6: ein Grundfließbild eines sechsten Ausführungsbeispiels einer bevorzugten Vorrichtung, wobei eine Mahleinheit vor einer Reaktoreinheit, in einer Reaktorrezirkulationseinrichtung der Reaktoreinheit zur Erzeugung der Suspension aus einem phosphathaltigen Rohstoff und einer Säure und nach der Reaktoreinheit angeordnet ist, und

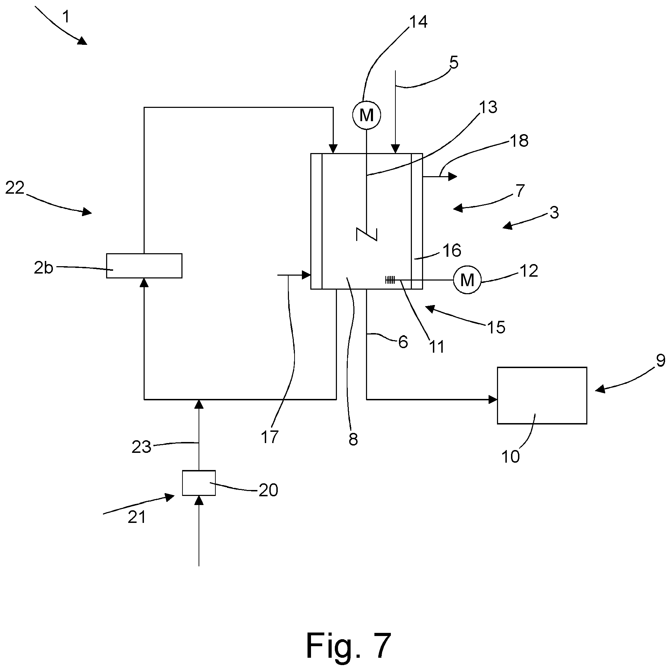

- Figur 7: ein Grundfließbild eines siebten Ausführungsbeispiels einer bevorzugten Vorrichtung, wobei eine Mahleinheit in einer Reaktorrezirkulationseinrichtung einer Reaktoreinheit zur Erzeugung der Suspension aus einem phosphathaltigen Rohstoff und einer Säure angeordnet ist und im Rohstoffzulauf der Reaktorrezirkulationseinrichtung eine als Sieb ausgebildete Klassiereinheit angeordnet ist.

Fig. 1 zeigt ein Grundfließbild eines ersten Ausführungsbeispiels einer bevorzugten Vorrichtung 1, wobei eine Mahleinheit 2 vor einer Reaktoreinheit 3 zur Erzeugung der Suspension aus einem phosphathaltigen Rohstoff und einer Säure angeordnet ist.

Die Säure ist hierbei bevorzugt eine Mineralsäure, nämlich Salz-, Schwefel-, Salpeter- oder Phosphorsäure, oder ein beliebiges Gemisch aus den vorgenannten Mineralsäuren.

Aufgrund der Verwendung von Säure sind die Bauteile der nachfolgend beschriebenen bevorzugten Vorrichtungen 1 allesamt so ausgebildet, dass diese eine säurebedingten Korrosion standhalten.

Die Vorrichtung 1 zur Herstellung von Düngemittelgranulat weist die Mahleinheit 2 zur Zerkleinerung des phosphathaltigen Rohstoffs, die über einen Rohstoffzulauf 4 für die phosphathaltigen Rohstoffe, einen Säurezulauf 5 für die bevorzugten Mineralsäuren und einen Reaktorablauf 6 für die Suspension verfügende und einen als Doppelmantelreaktor 7 ausgebildeten Reaktor 8 zur Erzeugung einer Suspension aus dem phosphathaltigen Rohstoff und der bevorzugten Mineralsäure aufweisende Reaktoreinheit 3 sowie einen stromab der Reaktoreinheit 3 angeordneten Granulator 9 zur Granulation der erzeugten Suspension auf. Der Granulator 9 ist im ersten Ausführungsbeispiel als Strahlschichtapparat 10 ausgebildet.

Die Mahleinheit 2, die Reaktoreinheit 3 und der als Strahlsichtapparat 10 ausgebildete Granulator 9 sind im ersten Ausführungsbeispiel fluidisch miteinander verbunden. Insbesondere wird die fluidische Verbindung der einzelnen Vorrichtungskomponenten durch Leitungen, insbesondere Rohr- oder flexible Schlauchleitungen, hergestellt.

Die Mahleinheit 2 ist im ersten Ausführungsbeispiel vor der Reaktoreinheit 3 zur Erzeugung der Suspension aus einem phosphathaltigen Rohstoff und einer bevorzugten Mineralsäure angeordnet. Dadurch erfolgt der Mahlvorgang der phosphathaltigen Rohstoffe vor der Erzeugung der Suspension im Reaktor 8 der Reaktoreinheit 3 als Trockenmahlung. Diese weist als Vorteil eine hohe Mahleffektivität bei gleichzeitig geringem Platzbedarf und geringem spezifischen Energieverbrauch auf.

Zudem ist bei der Trockenmahlung die gewünschte Endfeinheit der Rohstoffpartikel des phosphathaltigen Rohstoffs frei und exakt einstellbar.

Des Weiteren weist der Reaktor 8 der Reaktoreinheit 3 einen Zerhacker 11 auf. Der Zerhacker 11 verfügt insbesondere über einen Zerhackerantrieb 12, bevorzugt einen elektrischen Direktantrieb, besonders bevorzugt einen Elektro- oder Torquemotor.

Zudem weist die Reaktoreinheit 3, bevorzugt der Reaktor 8, eine Rühreinheit 13 auf. Die Rühreinheit 13 umfasst vorteilhafterweise einen Rührantrieb 14, bevorzugt einen elektrischen Direktantrieb, besonders bevorzugt einen Elektro- oder Torquemotor.

Zusätzlich verfügt die Reaktoreinheit im ersten Ausführungsbeispiel über eine Temperiereinheit 15 zur Wärmezu- oder Wärmeabfuhr der Suspension. Diese ist hier als Doppelmantel 16 des als Doppelmantelreaktor 7 ausgebildeten Reaktors 8 ausgebildet. Die als Doppelmantel 16 ausgebildete Temperiereinheit 15 weist einen Temperiereinheitzulauf 17 und einen Temperiereinheitablauf 18 für das durch den Doppelmantel 16 strömende Heizmedium auf. Dient die Temperiereinheit 15 zur Kühlung wird als Heizmedium ein Kühlmedium eingesetzt.

Das Verfahren zur Herstellung von Düngemittelgranulat läuft in der dem ersten Ausführungsbeispiel entsprechenden Vorrichtung 1 wie folgt ab:
Zuerst wird dem Reaktor 8 der Reaktoreinheit 3 über den Rohstoffzulauf 4 ein phosphathaltiger Rohstoff zugeführt, wobei der phosphathaltige Rohstoff im Rohstoffzulauf 4 mittels der Mahleinheit 2 zerkleinert bzw. gemahlen wird. Der in der Mahleinheit 2 ablaufende Mahlvorgang der phosphathaltigen Rohstoffe erfolgt als Trockenmahlung, die eine hohe Mahleffektivität bei geringem Platzbedarf und geringem spezifischen Energieverbrauch aufweist und bei der die gewünschte Endfeinheit der Rohstoffpartikel des phosphathaltigen Rohstoffs frei und exakt einstellbar sind.

Dem Reaktor 8 der Reaktoreinheit 3 wird zudem, insbesondere parallel zur Zuführung des gemahlenen, phosphathaltigen Rohstoffs über den Säurezulauf 5 eine Säure, bevorzugt eine Mineralsäure, bspw. Salz-, Schwefel-, Salpeter- oder Phosphorsäure, oder ein beliebiges Gemisch aus den vorgenannten Mineralsäuren, zugeführt.

Der phosphathaltige Rohstoff und die Säure bilden im Reaktor 8 der Reaktoreinheit 3 eine Suspension. Die Bildung der Suspension wird durch Rühren der Ausgangsstoffe - phosphathaltiger Rohstoff und Säure - der mittels Rührantrieb 14 angetriebenen Rühreinheit 13 verbessert bzw. beschleunigt.

Die bei der Erzeugung der Reaktion zuzuführende oder abzuführende Wärme wird über die als Doppelmantel 16 ausgebildete Temperiereinheit 15 in den als Doppelmantelreaktor 7 ausgebildeten Reaktor 8 ein- oder ausgebracht.

Größere im Reaktor 8 der Reaktoreinheit 3 anfallende Rohstoffpartikel werden durch den mittels Zerhackerantrieb 12 angetriebenen Zerhacker 11 zerkleinert.

Im Anschluss wird die im Reaktor 8 der Reaktoreinheit 3 erzeugte Suspension nach ihrer Verweilzeit im als Doppelmantelreaktor 7 ausgebildeten Reaktor 8 über den Reaktorablauf 6 dem als Strahlschichtapparat 10 ausgebildeten Granulator 9 zur Granulation zugeführt. Die fertigen Düngemittelgranulate werden dem Granulator 9 nach ihrer Herstellung entnommen.

Bevorzugt wird die mit dem phosphathaltigen Rohstoff reagierende Säure, bevorzugt eine Mineralsäure, derart passend zu den phosphathaltigen Rohstoffen ausgewählt, dass in der in der Reaktoreinheit 3 erzeugten Suspension während ihrer Verweilzeit im Reaktor 8 die schwerlöslichen Phosphate des phosphathaltigen Rohstoffs durch die Säure zumindest teilweise gelöst und in eine neutral-ammoniumcitratlösliche Phosphatphase umgewandelt werden, sodass sich ein Düngemittelgranulat bildet dessen P₂O₅-Gehalt (P-Gehalt) größer 75 % neutral-ammoniumcitratlöslich ist. Durch die aufgrund des Mahlvorgangs feineren phosphathaltigen Rohstoffpartikel weisen diese eine größere reaktive Oberfläche auf, sodass aus dem phosphathaltigen Rohstoff die schwerlöslichen Phosphate mittels der Säure verbessert herauslösbar sind. Bevorzugt ist der erhaltene P-Gehalt der Düngemittelgranulate sogar größer 80 % neutral-ammoniumcitratlöslich, besonders bevorzugt größer 85 % neutral-ammoniumcitratlöslich.

In der Fig. 2 wird ein Grundfließbild eines zweiten Ausführungsbeispiels einer bevorzugten Vorrichtung 1 dargestellt, wobei eine Mahleinheit 2 nach einer Reaktoreinheit 3 zur Erzeugung der Suspension aus einem phosphathaltigen Rohstoff und einer Säure angeordnet ist.

Die Säure ist hierbei bevorzugt eine Mineralsäure oder ein beliebiges Gemisch aus Mineralsäuren, wie Salz-, Schwefel-, Salpeter- oder Phosphorsäure.

Die Vorrichtung 1 zur Herstellung von Düngemittelgranulat weist die über einen Rohstoffzulauf 4 für die phosphathaltigen Rohstoffe, einen Säurezulauf 5 für die bevorzugten Mineralsäuren und einen Reaktorablauf 6 für die Suspension verfügende und einen Reaktor 8 zur Erzeugung einer Suspension aus dem phosphathaltigen Rohstoff und der Säure aufweisende Reaktoreinheit 3 sowie eine stromab der Reaktoreinheit 3 angeordnete Mahleinheit 2 zur Zerkleinerung des phosphathaltigen Rohstoffs und einen stromab der Mahleinheit 2 angeordneten Granulator 9 zur Granulation der erzeugten Suspension auf. Der Granulator 9 ist im ersten Ausführungsbeispiel als Wirbelschichtapparat 19 ausgebildet. Der Granulator 9 könnte ebenso als Strahlschichtapparat 10 oder als sonstiger Granulator, z. B. High-Shear Granulator ausgebildet sein.

Stromauf der Reaktoreinheit 3 ist eine als Sieb 20 ausgebildete Klassiereinheit 21 angeordnet. In erster Linie werden durch das Sieb 20 grobe Verunreinigungen aus dem phosphathaltigen Rohstoff entfernt. Zudem erfolgt durch die als Sieb 20 ausgebildete Klassiereinheit 21 auch eine Trennung des phosphathaltigen Rohstoffs in Fraktionen, vorzugsweise nach den Kriterien Partikelgröße oder Partikeldichte. Ziel der Klassiereinheit ist die Herstellung von mindestens zwei Teilmengen des phosphathaltigen Rohstoffs, wobei jede Teilmenge möglichst vollständig den vorgegebenen Partikelgrößenkriterien entspricht. Hierdurch wird neben dem Herausfiltern von groben Verunreinigungen, wie Abfällen oder dergleichen, durch die Klassiereinheit 21 eine Vorauswahl der weiterzuverarbeitenden phosphathaltigen Rohstoffpartikel erreicht, sodass das herzustellende Düngemittelgranulat eine besonders hohe Qualität aufweist.

Klassiereinheit 21, Mahleinheit 2, Reaktoreinheit 3 und der als Wirbelsichtapparat 19 ausgebildete Granulator 9 sind im zweiten Ausführungsbeispiel fluidisch miteinander gekoppelt, wobei die fluidische Verbindung der einzelnen Vorrichtungskomponenten vorteilhafterweise durch Leitungen, insbesondere Rohr- und/oder flexible Schlauchleitungen, hergestellt wird.

Im zweiten Ausführungsbeispiel ist die Mahleinheit 2 nach der Reaktoreinheit 3 zur Erzeugung der Suspension aus einem phosphathaltigen Rohstoff und einer Säure angeordnet. Daher erfolgt im zweiten Ausführungsbeispiel anstelle der im ersten Ausführungsbeispiel beschriebenen Trockenmahlung des phosphathaltigen Rohstoffs eine Nassmahlung. Diese weist einen geringen spezifischen Energieverbrauch auf und ermöglicht zudem das Verarbeiten von gröberen phosphathaltigen Rohstoffen. Darüber hinaus weist die Rührwerkslagerung keine Produktberührung auf.

Die Reaktoreinheit 3, bevorzugt der Reaktor 8, weist eine Rühreinheit 13 auf, die vorteilhafterweise einen Rührantrieb 14, bevorzugt einen elektrischen Direktantrieb, besonders bevorzugt einen Elektro- oder Torquemotor, umfasst.

Das Verfahren zur Herstellung von Düngemittelgranulat läuft in der dem zweiten Ausführungsbeispiel entsprechenden Vorrichtung 1 wie folgt ab:
Zuerst wird dem Reaktor 8 der Reaktoreinheit 3 über den Rohstoffzulauf 4 ein phosphathaltiger Rohstoff zugeführt, wobei der phosphathaltige Rohstoff im Rohstoffzulauf 4 mittels der als Sieb 20 ausgebildeten Klassiereinheit 21 gesiebt wird, sodass grobe Verunreinigungen herausgefiltert werden.

Dem Reaktor 8 der Reaktoreinheit 3 wird darüber hinaus, bevorzugt parallel zur Zuführung des phosphathaltigen Rohstoffs, über den Säurezulauf 5 eine Säure, bevorzugt eine Mineralsäure, nämlich Salz-, Schwefel-, Salpeter- oder Phosphorsäure, oder ein beliebiges Gemisch aus den vorgenannten Mineralsäuren, zugeführt.

Der phosphathaltige Rohstoff und die bevorzugte Mineralsäure bilden im Reaktor 8 der Reaktoreinheit 3 eine Suspension. Die Bildung der Suspension wird durch den Einsatz der mittels Rührantrieb 14 angetriebenen Rühreinheit 13 optimiert und beschleunigt.

Im Anschluss wird die im Reaktor 8 erzeugte Suspension nach ihrer Verweilzeit in diesem über den Reaktorablauf 6 einer eine Nassmahlung der Suspension durchführenden Mahleinheit 2 zugeführt. Durch die aufgrund des Mahlvorgangs feineren phosphathaltigen Rohstoffpartikel weisen diese eine größere reaktive Oberfläche auf, sodass aus dem phosphathaltigen Rohstoff durch den Kontakt mit der Mineralsäure während der Verweilzeit der Suspension im Reaktor 8 die schwerlöslichen Phosphate verbessert herauslösbar sind. Hierdurch bilden sich bevorzugt Düngemittelgranulate deren P₂O₅-Gehalt (P-Gehalt) größer 75 % neutral-ammoniumcitratlöslich ist, bevorzugt größer 80 % neutral-ammoniumcitratlöslich, besonders bevorzugt größer 85 % neutral-ammoniumcitratlöslich. Zudem wird die mit dem phosphathaltigen Rohstoff reagierende Säure, bevorzugt eine Mineralsäure, derart passend zu den phosphathaltigen Rohstoffen ausgewählt, dass in der in der Reaktoreinheit 3 erzeugten Suspension die schwerlöslichen Phosphate des phosphathaltigen Rohstoffs zumindest teilweise gelöst und in eine neutral-ammoniumcitratlösliche Phosphatphase umgewandelt werden.

Nach der Mahleinheit 2 wird die Suspension dem als Wirbelschichtapparat 19 ausgebildeten Granulator 9 zur Granulation zugeführt. Die fertigen Düngemittelgranulate werden dem Granulator 9 nach ihrer Herstellung entnommen.

Die nachfolgend beschriebenen Ausführungsbeispiele drei bis sieben basierenden allesamt auf demselben Grundprinzip einer Rezirkulation der Suspension in der Reaktoreinheit 3. Dementsprechend gelten für alle Ausführungsbeispiele die gleichen Bezugszahlen.

Ein Grundfließbild eines dritten Ausführungsbeispiels einer bevorzugten Vorrichtung 1, wobei eine Mahleinheit 2 in einer Reaktorrezirkulationseinrichtung 22 der Reaktoreinheit 3 zur Erzeugung der Suspension aus einem phosphathaltigen Rohstoff und einer Säure angeordnet ist, wird in Fig. 3 gezeigt.

Auch im dritten Ausführungsbeispiel ist die Säure bevorzugt eine Mineralsäure oder ein beliebiges Gemisch aus Mineralsäuren, nämlich Salz-, Schwefel-, Salpeter- oder Phosphorsäure.

Die Vorrichtung 1 zur Herstellung von Düngemittelgranulat weist die über einen Rohstoffzulauf 4 für die phosphathaltigen Rohstoffe, einen Säurezulauf 5 für die bevorzugten Mineralsäuren und einen Reaktorablauf 6 für die Suspension verfügende und einen als Doppelmantelreaktor 7 ausgebildeten Reaktor 8 zur Erzeugung einer Suspension aus dem phosphathaltigen Rohstoff und der Säure aufweisende Reaktoreinheit 3 sowie einen stromab der Reaktoreinheit 3 angeordneten als Strahlschichtapparat 10 ausgebildeten Granulator 9 zur Granulation der erzeugten Suspension auf. Der Granulator 9 könnte ebenso als Strahlschichtapparat 10 oder als sonstiger Granulator, z. B. High-Shear Granulator oder auch low-shear (Granulierteller) ausgebildet sein.

Darüber hinaus verfügt die Reaktoreinheit 3 über eine am Reaktor 8 angeordnete Reaktorrezirkulationseinrichtung 22 für die Suspension. Im dritten Ausführungsbeispiel weist die Reaktorrezirkulationseinrichtung 22 die Mahleinheit 2 zur Zerkleinerung des phosphathaltigen Rohstoffs auf. Daher erfolgt im dritten Ausführungsbeispiel eine Nassmahlung, die vorteilhafterweise einen geringen spezifischen Energieverbrauch aufweist und zusätzlich grobe in der Suspension anfallende phosphathaltige Rohstoffe verarbeiten kann. Die Reaktorrezirkulationseinrichtung 22 umfasst zudem einen weiteren Rohstoffzulauf 23. Hierdurch besteht die Möglichkeit der Reaktoreinheit 3 phosphathaltige Rohstoffe zuzuführen oder bei Konzentrationsschwankungen der Suspension im P-Gehalt durch eine weitere Zufuhr an phosphathaltigen Rohstoffen diese auszugleichen.

Die einzelnen Komponenten der bevorzugten Vorrichtung 1, insbesondere Mahleinheit 2, Reaktoreinheit 3 und Granulator 9 sind im dritten Ausführungsbeispiel fluidisch miteinander verbunden, wobei die fluidische Verbindung der einzelnen Vorrichtungskomponenten durch Leitungen, insbesondere Rohr- und/oder flexible Schlauchleitungen, hergestellt wird.

Des Weiteren weist der Reaktor 8 der Reaktoreinheit 3 einen über einen Zerhackerantrieb 12 angetriebenen Zerhacker 11 und eine mittel Rührantrieb 14 angetriebene Rühreinheit 13 auf. Zerhacker 11 und Rühreinheit 13 verfügen jeweils über einen Antrieb 12, 14, bevorzugt einen elektrischen Direktantrieb, besonders bevorzugt einen Elektro- oder Torquemotor.

Zusätzlich verfügt die Reaktoreinheit im dritten Ausführungsbeispiel über eine als Doppelmantel 16 ausgebildete Temperiereinheit 15 zur Wärmezufuhr oder Wärmeabfuhr der Suspension. Diese weist einen Temperiereinheitzulauf 17 und einen Temperiereinheitablauf 18 für das durch den Doppelmantel 16 strömende Heizmedium auf. Dient die Temperiereinheit 15 zur Kühlung wird als Heizmedium ein Kühlmedium eingesetzt.

Das Verfahren zur Herstellung von Düngemittelgranulat läuft in der dem dritten Ausführungsbeispiel entsprechenden Vorrichtung 1 wie folgt ab:
Zuerst wird dem Reaktor 8 der Reaktoreinheit 3 über den Rohstoffzulauf 4 ein phosphathaltiger Rohstoff und über den Säurezulauf 5 eine Säure, bevorzugt eine Mineralsäure, bspw. Salz-, Schwefel-, Salpeter- oder Phosphorsäure, oder ein beliebiges Gemisch aus den vorgenannten Mineralsäuren, zugeführt.

Der phosphathaltige Rohstoff und die Säure bilden im Reaktor 8 der Reaktoreinheit 3 eine Suspension. Die Bildung der Suspension wird durch Rühren der mittels Rührantrieb 14 angetriebenen Rühreinheit 13 gefördert. Die bei der Erzeugung der Reaktion zuzuführende oder abzuführende Wärme wird über die als Doppelmantel 16 ausgebildete Temperiereinheit 15 in den als Doppelmantelreaktor 7 ausgebildeten Reaktor 8 ein- oder ausgebracht.

Größere im Reaktor 8 der Reaktoreinheit 3 anfallende Rohstoffpartikel werden durch den mittels Zerhackerantrieb 12 angetriebenen Zerhacker 11 zerkleinert.

Zur Verlängerung der Verweilzeit in der Reaktoreinheit 3 wird die im Reaktor 8 erzeugte Suspension mittels einer Reaktorrezirkulationseinrichtung 22 in der Reaktoreinheit 3 rezirkuliert. Die Reaktorrezirkulationseinrichtung 22 wird im einfachsten Fall aus einer Rohrleitung und einer Fördereinrichtung ausgebildet. Durch die Rezirkulation erfolgt ein verbesserter Aufschluss des in der Reaktoreinheit 3 befindlichen phosphathaltigen Rohstoffe durch die Säure. Zudem wird durch die Änderung des Anteils des rezirkulierten Suspensionsstoffstroms das Reaktionsvolumen in der Reaktoreinheit 3 und die Verweilzeit der Suspension in der Reaktoreinheit 3 getrennt voneinander einstellbar.

Die Reaktorrezirkulationseinrichtung 22 verfügt über die Mahleinheit 2. Hierdurch wird der phosphathaltige Rohstoff in der rezirkulierenden Suspension gemahlen bzw. zerkleinert und durch die vergrößerte Reaktionsoberfläche der phosphathaltigen Rohstoffpartikel wird eine beschleunigte Kinetik erreicht. Insbesondere wird jedoch die Verstopfungsgefahr bspw. in Düsen des Granulators 9, insbesondere in dem Strahlschichtapparat 10 reduziert. Der Mahlvorgang der phosphathaltigen Rohstoffe in der Reaktorrezirkulationseinrichtung 22 erfolgt als Nassmahlung, die eine hohe Mahleffektivität bei geringem Platzbedarf und geringem spezifischen Energieverbrauch aufweist und bei der die gewünschte Endfeinheit der Rohstoffpartikel des phosphathaltigen Rohstoffs frei und exakt einstellbar sind.

Die Reaktorrezirkulationseinrichtung 22 weist den weiteren Rohstoffzulauf 23 zur Zuführung phosphathaltiger Rohstoffe auf.

Nach der Verweilzeit der Suspension in der Reaktoreinheit 3 wird im Anschluss die im als Doppelmantelreaktor 7 ausgebildeten Reaktor 8 erzeugte Suspension über den Reaktorablauf 6 einem als Strahlschichtapparat 10 ausgebildeten Granulator 9 zur Granulation zugeführt. Die fertigen Düngemittelgranulate werden dem Granulator 9 nach ihrer Herstellung entnommen.

Bevorzugt wird die mit dem phosphathaltigen Rohstoff reagierende Säure über den Säurezulauf 5, bevorzugt eine Mineralsäure, derart passend zu den phosphathaltigen Rohstoffen ausgewählt, sodass in der in der Reaktoreinheit 3 erzeugten Suspension die schwerlöslichen Phosphate des phosphathaltigen Rohstoffs zumindest teilweise durch die Säure gelöst und in eine neutral-ammoniumcitratlösliche Phosphatphase umgewandelt werden, sodass sich ein Düngemittelgranulat bildet dessen P₂O₅-Gehalt (P-Gehalt) größer 75 % neutral-ammoniumcitratlöslich ist, bevorzugt größer 80 %, besonders bevorzugt größer 85 %. Durch die aufgrund des Mahlvorgangs feineren phosphathaltigen Rohstoffpartikel weisen diese eine größere reaktive Oberfläche auf, sodass aus dem phosphathaltigen Rohstoff die schwerlöslichen Phosphate mittels der Säure verbessert herauslösbar sind.

In Fig. 4 wird ein Grundfließbild eines vierten Ausführungsbeispiels einer bevorzugten Vorrichtung 1 gezeigt, wobei eine Mahleinheit 2 vor einer Reaktoreinheit 3 und in einer Reaktorrezirkulationseinrichtung 22 der Reaktoreinheit 3 zur Erzeugung der Suspension aus einem phosphathaltigen Rohstoff und einer Säure angeordnet ist.

Auch im vierten Ausführungsbeispiel ist die Säure bevorzugt eine Mineralsäure oder ein beliebiges Gemisch aus Mineralsäuren, nämlich Salz-, Schwefel-, Salpeter- oder Phosphorsäure.

Im Unterschied zur Vorrichtung 1 des dritten Ausführungsbeispiels weist die Vorrichtung 1 keinen weiteren Rohstoffzulauf 23 auf. Zudem ist im Rohstoffzulauf 4 die Mahleinheit 2 angeordnet.

Die Vorrichtung umfasst im Rohstoffzulauf 4 eine erste Mahleinrichtung 2a.

Die Reaktoreinheit 3 verfügt über eine am Reaktor 8 angeordnete Reaktorrezirkulationseinrichtung 22 für die Suspension mit einer zweiten Mahleinheit 2b zur Zerkleinerung des phosphathaltigen Rohstoffs.

Daher erfolgt im vierten Ausführungsbeispiel sowohl eine Trocken- als auch eine Nassmahlung des phosphathaltigen Rohstoffs. Eine Kombination von Trocken- und Nassmahlung ermöglicht eine Mahlung von Suspensionen und trockenen Rohstoffen. Vorteilhaft ist hierbei ein deutlich reduzierter Gesamtenergieverbrauch, eine Durchsatzerhöhung bei gleichbleibender Produktfeinheit oder alternativ eine Steigerung der Produktfeinheit bei gleichbleibendem Durchsatz. Ferner macht die Kombination mit von Trocken- und Nassmahlung den Einsatz von kontinuierlich und diskontinuierlich arbeitenden Mühlen möglich.

Fig. 5 stellt ein Grundfließbild eines fünften Ausführungsbeispiels einer bevorzugten Vorrichtung 1 dar, wobei eine Mahleinheit 2b in einer Reaktorrezirkulationseinrichtung 22 der Reaktoreinheit 3 zur Erzeugung der Suspension aus einem phosphathaltigen Rohstoff und einer Säure sowie eine Mahleinheit 2a nach der Reaktoreinheit 3 angeordnet ist.

Im Unterschied zur Vorrichtung 1 des vierten Ausführungsbeispiels ist bei der Vorrichtung 1 des fünften Ausführungsbeispiels die erste Mahleinheit 2 statt im Rohstoffzulauf 4 vor der Reaktoreinheit 3 zwischen der Reaktoreinheit 3 und dem Granulator 9 angeordnet.

Die Verfahrensabläufe ändern sich dementsprechend, dass keine Trockenmahlung, sondern zwei Nassmahlungen in der bevorzugten Vorrichtung 1 stattfinden, nämlich in der ersten Mahleinheit 2a zwischen Reaktoreinheit 3 und Granulator 9 und in der zweiten Mahleinheit 2b in der Reaktorrezirkulationseinrichtung 22.

In Fig. 6 wird ein Grundfließbild eines sechsten Ausführungsbeispiels einer bevorzugten Vorrichtung 1 gezeigt, wobei eine Mahleinheit 2 vor der Reaktoreinheit 3, in der Reaktorrezirkulationseinrichtung 22 der Reaktoreinheit 3 zur Erzeugung der Suspension aus einem phosphathaltigen Rohstoff und einer Säure sowie nach der Reaktoreinheit 3 angeordnet ist.

Im Unterschied zur Vorrichtung 1 des vierten Ausführungsbeispiels ist bei der Vorrichtung 1 des sechsten Ausführungsbeispiels zusätzlich nach einem Reaktorablauf 4 eine dritte Mahleinheit 2c zwischen Reaktoreinheit 3 und Granulator 9 angeordnet.

Die Verfahrensabläufe ändern sich dementsprechend, dass eine Trockenmahlung vor der Reaktoreinheit 3, eine Nassmahlung in der Reaktorrezirkulationseinrichtung 22 der Reaktoreinheit 3 und eine Nassmahlung zwischen Reaktoreinheit 3 und Granulator 9 stattfindet.

Ein Grundfließbild eines siebten Ausführungsbeispiels einer bevorzugten Vorrichtung 1, wobei eine Mahleinheit 2 in der Reaktorrezirkulationseinrichtung 22 der Reaktoreinheit 3 zur Erzeugung der Suspension aus einem phosphathaltigen Rohstoff und einer Säure angeordnet ist und ein Rohstoffzulauf 23 in der Reaktorrezirkulationseinrichtung 22 eine als Sieb 20 ausgebildete Klassiereinheit 21 aufweist.

Die Vorrichtung 1 des siebten Ausführungsbeispiels entspricht ebenfalls dem dritten Ausführungsbeispiel mit dem Unterschied, dass anstelle der Rohstoffzulauf 23 in der Reaktorrezirkulationseinrichtung 22 die als Sieb 20 ausgebildete Klassiereinheit 21 aufweist und kein Rohstoffzulauf 4 existiert. Die phosphathaltigen Rohstoffe werden alle über den Rohstoffzulauf 23 in die Reaktorrezirkulationseinrichtung 22 und damit in die Reaktoreinheit 3 eingebracht.

Möglich aber nicht dargestellt ist es den Säurezulauf 5 in der Reaktorrezirkulationseinrichtung 22 anzuordnen.

## Patentansprüche

1. Vorrichtung (1) zur Herstellung von Düngemittelgranulat umfassend eine über einen Rohstoffzulauf (4, 23), einen Säurezulauf (5) und einen Reaktorablauf (6) verfügende, einen Reaktor (8) aufweisende Reaktoreinheit (3) zur Erzeugung einer Suspension aus dem phosphathaltigen Rohstoff und der Säure sowie einen Granulator (9) zur Granulation der erzeugten Suspension, **dadurch gekennzeichnet, dass** die Vorrichtung (1) eine Mahleinheit (2) für den phosphathaltigen Rohstoff aufweist.

2. Vorrichtung (1) nach Anspruch 1, **dadurch gekennzeichnet, dass** Mahleinheit (2), Reaktoreinheit (3) und Granulator (9) fluidisch miteinander verbunden sind.

3. Vorrichtung (1) nach Anspruch 1 oder 2, **dadurch gekennzeichnet, dass** die Mahleinheit (2) vor, nach und/oder in der Reaktoreinheit (3) zur Erzeugung der Suspension aus einem phosphathaltigen Rohstoff und einer Säure angeordnet ist.

4. Vorrichtung (1) nach einem der vorhergehenden Ansprüche, **dadurch gekennzeichnet, dass** die Reaktoreinheit (3) über eine am Reaktor (2) angeordnete Reaktorrezirkulationseinrichtung (22) für die Suspension verfügt.

5. Vorrichtung (1) nach Anspruch 4, **dadurch gekennzeichnet, dass** die Reaktorrezirkulationseinrichtung (22) die Mahleinheit (2) aufweist.

6. Vorrichtung (1) nach Anspruch 4 oder 5, **dadurch gekennzeichnet, dass** die Reaktorrezirkulationseinrichtung (22) einen Rohstoffzulauf (23) aufweist.

7. Vorrichtung (1) nach einem der Ansprüche 4 bis 6, **dadurch gekennzeichnet, dass** die Reaktoreinheit (3), bevorzugt der Reaktor (8), über einen Zerhacker (11) verfügt.

8. Vorrichtung (1) nach Anspruch 7, **dadurch gekennzeichnet, dass** der Zerhacker (11) einen Zerhackerantrieb (12), bevorzugt einen elektrischen Direktantrieb, besonders bevorzugt einen Elektro- oder Torquemotor aufweist.

9. Vorrichtung (1) nach einem der vorhergehenden Ansprüche, **dadurch gekennzeichnet, dass** die Reaktoreinheit (3), bevorzugt der Reaktor (8), eine Rühreinheit (13) aufweist.

10. Vorrichtung (1) nach Anspruch 9, **dadurch gekennzeichnet, dass** die Rühreinheit (13) einen Rührantrieb (14), bevorzugt einen elektrischen Direktantrieb, besonders bevorzugt einen Elektro- oder Torquemotor aufweist.

11. Vorrichtung (1) nach einem der vorhergehenden Ansprüche, **dadurch gekennzeichnet, dass** die Reaktoreinheit (3) über eine Temperiereinheit (15) zur Wärmezufuhr oder Wärmeabfuhr der Suspension verfügt.

12. Vorrichtung (1) nach Anspruch 11, **dadurch gekennzeichnet, dass** die Temperiereinheit (15) als Doppelmantel (16) des Reaktors (8) ausgebildet ist.

13. Vorrichtung (1) nach einem der vorhergehenden Ansprüche, **dadurch gekennzeichnet, dass** die Vorrichtung (1) über eine Klassiereinheit (21) verfügt, bevorzugt ein Sieb (20) oder einen Sichter.

14. Vorrichtung (1) nach Anspruch 13, **dadurch gekennzeichnet, dass** die Klassiereinheit (21) im Rohstoffzulauf (4, 23) angeordnet ist.

15. Vorrichtung (1) nach einem der vorhergehenden Ansprüche, **dadurch gekennzeichnet, dass** der Granulator (9) als Wirbelschicht- oder Strahlschichtapparat (10, 19) ausgebildet ist.
